# EUROPEAN PATENT APPLICATION

(11) **EP 4 549 012 A1**
(43) Date of publication of application: **07.05.2025**
(21) Application number: 23207300.7
(22) Date of filing: 01.11.2023
(51) Int. Cl.: B01J 19/08

(54) **PLASMA REACTOR FOR GAS PROCESSING**

(71) Applicant: Nederlandse Organisatie voor toegepast-natuurwetenschappelijk Onderzoek TNO, 2595 DA 's-Gravenhage (NL)
(72) Inventor: CREYGHTON, Yves Lodewijk Maria, 2595 DA 's-Gravenhage (NL); RIJFERS, Andries, 2595 DA 's-Gravenhage (NL); MIRPOUR, Shahriar, 2595 DA 's-Gravenhage (NL); VAN DEN BEKEROM, Dirk Cornelis Maria, 2595 DA 's-Gravenhage (NL); LINDEN, Joannes Leonard, 2595 DA 's-Gravenhage (NL)
(74) Representative: V.O.

(57) **Abstract**

The present disclosure provides a plasma reactor (100) for plasma induced chemical conversion of one or more compounds in a fluid medium. The reactor comprising a passage (1); an outlet (3); and at least two electrode pairs. Each electrode (10) comprises a jacket (11), an electrode rod (12), and an inlet (4) for injecting a primary gas (G1) flow along the rod. The rods are distributed around the passage. Rod tips are positioned upstream the throat of the passage. A second inlet (5) injects a secondary gas (G2) upstream or downstream the throat area (2). An operating circuit is driven to repetitively and simultaneously power the electrode pairs to generate an arc discharge (A) bridging the electrodes of each electrode pair. Neighboring electrodes of adjacent pairs are driven at the same time-varying potential. The electrodes are galvanically isolated each other and the power source.

## Description

### TECHNICAL FIELD AND BACKGROUND

The present disclosure relates to the field of plasma reactors, more specifically to a pulsed arc plasma reactor for reagent conversion.

Plasma reactors for gas conversion are known in the art. A number of different classes/types can be discerned. Dielectric Barrier Discharges (DBD) and Nanosecond Pulsed Discharges (NPD) can be classified as part of the so-called cold discharge reactors in which plasma is generally operated at temperatures from close to room temperature up to temperatures of about 1000K. The chemical gas conversion in cold plasma reactors is mainly based on electron-impact dissociation forming plasma activated species such as radicals, ions and energy excited atoms and molecules. The reactors provide comparatively limited profit from thermal dissociation. Short residence times at high temperature may be locally reached inside discharge channels. However, a part of the gas flow will inevitably not be directly exposed to the discharge channels causing an overall low conversion in practice. When used for applications wherein the chemical conversion mainly depends on thermal dissociation, such as for plasma conversion of CH₄ to C₂H₂, and generation of NOx from air, the yields are generally low. Alternatively, or in addition, DBD and NPD disadvantageously have high heat transfer (and loss), e.g. via the adjacent electrodes which are mostly actively cooled, and/or the technical limitations and/or high costs in respect of power supplies for generating required pulse repetition frequency, at least for reasonable power levels.

A further class of reactors for gas conversion can be classified around reactors configured to generate DC and line-frequency (50/60 Hz) AC arcs. These reactors generate high temperature plasmas reaching core temperatures in the range 10,000 K and above. In general, the arc channel is centered along the axial region of a tubular reactor or rapidly rotated between cylindrical electrodes of a coaxial electrode configuration. The gas flow is principally heated indirectly by the heat transfer (convection, diffusion and radiation) from the high current arc column over a distance of several cm. Known DC and line frequency AC arc reactors typically provide poor selectivity which is believed to be due to a large spreading in residence times and/or large temperature gradients transverse to a main direction of flow.

Intermediate temperature plasma reactors (sometimes referred to as 'non-thermal' or `warm', such as Gliding Arc Discharge (GAD) and repetitive pulsed arc (spark) discharge reactors are capable of reaching local temperatures in the 1000-10000 K range. High frequency corona discharges may fall in this category as well as microwave plasma reactors, reaching core plasma temperatures in the range 1000-5000 K. In GAD reactors, in general the arc discharge column moves under influence of gas flow. Mostly, electrode surfaces are used where one or both arc roots are allowed to move. The arcs are typically oriented transversally with respect to the main gas flow direction and generally located between diverging electrode surfaces. As a result, the electrode gap distance increases while the arc moves and this results in a periodic extinction and re-ignition of arcs at the initial position where the gap is relatively small.

A limitation of GAD plasma reactors according, e.g. as taught in WO9830524 is the relatively large reaction volume, inherently coupled with the arc movement in the direction of main gas flow. Consequently, a significant portion of the gas flow is passing through the reactor at too far distance from the arc filaments to effectively partake in the desired conversion, leading to poor product yields of the plasma chemical conversion process. US2014021035A1 discloses a variation of a plasma reactor assembly comprising at least two non-thermal plasma reactors, each reactor comprising at least one circumferential gas flow vortex inlet for providing rotating arcs under influence of vortex flow injection. The reactors work in tandem such that the non-thermal plasma discharge is maintained between electrodes of the different reactors. To maintain required plasma power, multiple power modules are used, each module limited in its output power potential. Their frequency of operation is 1-1000 kHz but not less than the gliding arc (re-ignition) frequency. Known GAD type reactors, including the rotating vortex variations, remain susceptible to variations in arc stability and/or local temperature variations. Specifically, effects like arc merging/splitting, can negatively affect a gas flow's apparent residence time and/or exposure to plasma and/or heat.

The application of pulsed arc discharges (sparks) in two-electrode configurations is known from the field. Various parameters determine the average energy density of treated gases including: the energy per pulse, the pulse frequency (or repetition rate), gas composition and flow. Pulse lengths typically may vary from the nanosecond to millisecond time scale. CA2660088 discloses a plasma reactor configured for generating cold plasma pulses simultaneously between a plurality of electrodes and a common counter electrode (as opposed to a single arc interconnecting an electrode pair). The cold arc discharges are generated using either a plurality of HV electrodes in combination with a single ground electrode or a single HV electrode in combination with a plurality of ground electrodes.

### SUMMARY

The present invention aims to provide a reactor for plasma conversion capable of sustaining more stable and/or uniform plasma exposure to a flow of reagent(s).

Aspects of the present disclosure relate to a plasma reactor. The reactor comprises a passage that is provided within an interior volume of a reactor housing. The passage has a throat area that is fluidly connected to a reactor outlet. The reactor comprises at least two pairs of electrodes. The electrodes are also referred to as high voltage (HV) electrodes. Each electrode comprises: an electrode tube, referenced to as tubular jacket; an electrode rod extending longitudinally within the jacket; and a first inlet for injecting a flow of a primary fluid flow along a surface of the electrode rod towards a tip of the respective electrode rod. For example, it can be preferred to guide HV electrode rods through the tubes leaving only a narrow space between the outer surface of HV electrodes and the inner surface of electrode tubes. In this manner, high flow velocities are obtained which will be effective for cooling the HV electrode rods. Conductive heat transport via electrodes is effectively used for pre-heating primary gas, thus avoiding thermal conduction heat losses.

As will be detailed herein below the reactor can be of particular benefit for gas conversion. Specifically, the manufacture of one or more chemical products from appropriate reagents, such as hydrocarbons in a fluid medium. The fluid medium is, herein exemplified as being gaseous. It will be appreciated that the medium can comprise one or more liquid and/or solid compounds.

The electrode rods are distributed, pair wise, around a longitudinal axis of the passage whereby the tips of the electrode rods are positioned upstream the throat area. The tips of the electrode rods are preferably about equidistantly separated from the throat. The reactor includes a second inlet for injecting a secondary gas, said second inlet being positioned upstream or downstream the throat area. In an embodiment, the secondary gas is injected between the electrode tips and directed towards the throat of the passage. Alternatively, it may be brought in contact with the generated plasma at a lower point downstream. It will be understood that the reactor may include multiple inlets for secondary gas reagents. Secondary inlets preferably open along an axis centrally between the electrode tips.

An electric operating circuit is connected to the electrodes and comprises at least one power source. During use, the power source is driven to repetitively and simultaneously power electrode pairs at a voltage and rate generating arc discharges bridging the electrodes of each electrode pair, and to drive neighboring electrodes of adjacent pairs synchronously at the same time-varying potential. To optimize arc stability, repeatability of arc discharge channels between paired electrodes, and/or to mitigate splitting/merging of arc discharge channels, each of the electrodes is galvanically decoupled from the driving circuit, specifically the power source and the remaining HV electrodes in the system. Decoupling can be provided by a current limiting element as known in the field, typically a capacitor. Specifically, it is found that arc merging/splitting can be mitigated or essentially eliminated by: separately galvanic decoupling. For example, by coupling each electrode capacitively or inductively to the circuit. Alternatively, or in addition, the electrodes can be coupled to a separate power supply.

Inventors found that the reactor can advantageously generate multiple pulsed arc discharges in a primary plasma gas flow, within a converging flow plasma reactor. A secondary gas flow can be mixed inside the converging flow reactor volume with the downstream primary gas plasma. Using synchronized pulsed arc discharges, merging of adjacent arc channels is avoided, thereby mitigating or eliminating loss of uniform gas treatment.

As a consequence, the generated pulsed arc discharges, can be generally V-shape structured, extend towards the throat area of the passage, getting close to each other while remaining separated.

The separate capacitive coupling of the electrodes to a single power source can be realized by isolating each of the electrodes from the circuits by a capacitor, or for example a series of capacitators. Alternatively, the isolation may be provided by wiring via a transmission line capacitor (e.g. coaxial cable). To simplify timing and/or power distribution the capacitance of the capacitors is preferably within a comparatively limited tolerance range. Most preferably all capacitors are approximately equal, or at least within 5%, most preferably within 1%.

During operation, plasma-activated primary gas flows (from the electrodes) react with the secondary gas. Additionally, the arc discharges can advantageously extend towards the mixed zone of primary and secondary gas. Accordingly, the chemical conversion reaction of the primary and secondary gas mixture principally occurs in a limited volume inside or nearby the throat area.

In a preferred embodiment, the passage comprises a nozzle converging towards the reactor outlet, wherein said throat area is provided in said nozzle. The limited volume, together with accelerated flow velocities resulting from the converging nozzle, allow for short gas residence times within this volume. Residence times can advantageously be in the sub-millisecond range. Depending on the geometry, dissipated electrical power and flow settings, residence times of the order of 0.1 ms can be reached. Multiple gas flow paths through the constricted volume, wherein multiple, uniformly distributed, synchronized, proximate non-merging arc discharges are generated, advantageously provide one or more of: comparatively high uniformity of the temperature and plasma species concentration profiles within separated gas flow paths through the nozzle as a function of time; sub-millisecond average residence times; and limited spreading of the residence times. Without wishing to be bound by theory, observed realizing of separated arcs is believed to be at least in part facilitated by an outwardly projected portion of momentary unipolar charged flow of the first gas from the tip of each electrode.

As will be clear from the specification herein below the advantageous listed above can enable electrically generated plasma-induced chemical conversions with improved yield at reduced energy cost when compared with the state-of-the-art plasma chemical conversion technology.

The spacing between adjacent ones of the electrode tips may be about equal. For example, in some embodiments, the tips are distributed about homogenously around a circular trajectory upstream the throat area.

Alternatively, electrode rods can be arranged in pairs of linear rows at approximately equal distance from each other within a row and at approximately equal distance from the throat area of the passage.

It will be appreciated that the spacing between tips and the angle between adjacent electrode rods depends on a number n of arc-generating electrode pairs (n ≥ 2) provided.

In a preferred embodiment, arc-generating electrode pairs can be arranged around a circular trajectory or along a linear row upstream the throat area with a first spacing between electrode tips within each pair, operated at different time-varying potential and a second spacing between electrode tips from adjacent pairs, operated at the same and synchronized time-varying potential. The second spacing between electrodes of adjacent pairs, operated at the same time-varying potential, can be made relatively small with respect to the first spacing within pairs. This results in a more uniform plasma treatment of the primary gas flow. Positioning the tips of rods that, during use, operate at the same time-varying potential at comparatively smaller distance enables a closer spacing between electrode pairs wired for operating under arcing potential.

When arc generating electrode pairs are arranged around a single circular trajectory with a reactor, the number of pairs is preferably even (n=2, 4, 6 ...). With such arrangement, all of the neighboring electrodes powering different arc channels can be operated at the same time-varying potential.

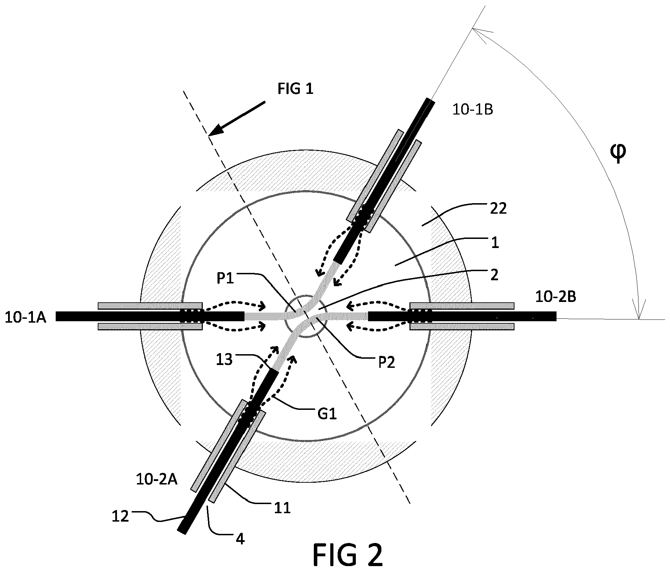

In another or further preferred embodiment, an end portion of the electrode rod including the tip protrudes from the tubular jacket thereby exposing the rod end section. Keeping ends of electrode rods at a controlled distance from tube (jacket) ends, localizes arc formation at electrode ends only, thus avoiding arc discharges between tubes. The primary gas flow fulfills several functions including an electrode and tube cooling function. More details of flow control using specific positions and shapes of the tube-electrode system are given in the descriptions of Figs. 2, 4 and 5.

An angle (θ) between the longitudinal axis (z) of and each of the rods at the passage is within a range of 30 to 90 degrees, preferably between 30 and 60 degrees, as seen along a direction towards the throat.

In another or further preferred embodiment, the tubular jacket is configured to provide an asymmetric flow volume around the surface of the rod such that, at least along its end portion, a flow resistance along a passage-facing side of the electrode rod and a flow resistance along a side of the rod facing the longitudinal axis of the passage are both smaller that along a direction towards adjacent electrode rods. In this way a portion of the primary gas flow is used to stabilize the arc within an angular volume pointing from the electrode rod tip to the throat area while avoiding direct contact between the arc and the passage. Additionally, the asymmetric flow resistance will permit some angular spreading of repetitive arc discharges in the azimuthal direction. This will improve the distribution of repetitive arc discharges in azimuthal direction. To minimize heat transfer of the arc to the wall of the passage, flow resistance can be made lowest along the passage wall facing side of the electrode rod.

A frequency of the time-varying potential is typically ≥ 1kHz to minimize variation of plasma exposure at high flow velocities. An upper limit can be determined by electronics, e.g. below 1 MHz. Inventors confirmed that merging/splitting of arc paths can be essentially prevented in an operating range of 10 kHz - 200 kHz.

In some preferred embodiments, the reactor comprises a further inlet for injecting a quench gas or quench liquid flow. This further inlet may be combined with the second inlet in an embodiment that the flow of secondary gas is injected downstream the throat area. The further inlet opens at a position between the throat area and the reactor outlet, preferably as close to the throat as possible. Injection of a flow of quench gas or liquid, e.g. an inert gas or water, can quickly reduce a temperature of the mixture leaving the throat to a prevent/mitigate an occurrence or progression of side-reactions and/or degradation reactions.

In other or further preferred embodiments, the plasma reactor further comprises a diverging flow element disposed between the throat and the outlet. Most preferably the diverging flow element is provided upstream the further inlet for quench gas or liquid, i.e. between the throat and the further inlet, when provided.

The diverging element can advantageously provide extremely fast cooling of the plasma gas from the throat by physical expansion. The subsequent cooling by dilution (quench) further cools and mitigates potential heat generated by slowing of the plasma gas flow. Accordingly, the combination serves as a fast pre-quench followed by slower quenching via injection of additional materials.

The passage and/or the diverging flow element are preferably formed of a dielectric refractory or otherwise plasma tolerant composition. Exemplary materials include quartz or high temperature resistive ceramics, for example boron nitride. Note that the use of an electrical conductive passage, for example made of graphite or a metal-graphite composition, is not excluded. The electrical conductive passage may be operated at a floating electrical potential, not directly connected with one of the electrodes being separated from them by a cold primary gas flow boundary layer.

To monitor a condition of electrode rods (e.g. a degradation state or a separation distance from an adjacent rods), each electrode rod can be provided with one capacitive-resistive voltage divider. The divider is operably connected to an electrode and configured for real-time voltage and or current monitoring of said electrode during operation.

For arc generation alternating voltage polarity pulses as well as unipolar voltage polarity pulses can be used. Alternating polarity pulse operation may be preferred as this results in elongated periods of net charging of arc channels, which is believed to contribute in avoiding unwanted merging of arc channels. In contrast, for unipolar voltage pulses the net charge delivered to the discharge must be zero within a single pulse-to-pulse period.

In some variations multiple of the passages together with the arrangement of electrode pairs can be provided within a single housing. In this way an output (processing rate) of a single reactor can be enlarged. Alternatively, or in addition, a single reactor can be configured for multiple processing conditions, e.g. for varying relative size, number, position, separation, and/or orientation of electrodes comprised in a respective arrangement around one or more of the throat areas.

Accordingly, in some embodiments, in particular embodiments accommodating higher volumes of secondary fluid the reactor comprises multiple passages having a respective throat area and housed within the reactor, each further one of the passages provided with at least two further pairs of further electrodes.

The plasma reactor may comprise a wall provided around the longitudinal axis of the passage formed by a dielectric material. The at least two pairs of arc generating electrodes are provided through openings provided in the wall such that the tips of the electrode rods are positioned upstream the throat area and about equidistantly separated therefrom. Preferably a large number of electrode pairs is provided, for example at least 6 pairs or at least 8 pairs. A larger number of electrode pairs may facilitate the through-put or mass flow rate of the plasma reactor.

In a preferred embodiment, the plasma reactor can comprise a flow shaping element provided in the second inlet such that the second inlet opens between the electrode tips and has an annular opening. This is advantageous as multiple injection channels may thus be facilitated. Compared with a single injection channel, the flow shaping element allows for injection of the secondary gas in the downstream section of V-shaped arc plasma channels using a larger number of electrode pairs within a single reactor unit.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1 provides a cross section view of a plasma reactor, principally oriented along the direction of main gas flow within the throat;
FIG 2 provides a cross section top view of a passage as shown by cross sections in Fig 1.
FIG 3 provides a cross section view of another embodiment of the plasma reactor, principally oriented along the direction of main gas flow within the throat;
FIG 4 provides a cross section top view of the passage as shown by cross sections in Fig 3.
FIG 5 provides a cross section view of the electrode at a position indicated in Fig 1;
FIG 6 provides a schematic view of an electrical circuit, using a single transformer wired for application of HV pulses to two pairs of electrodes;
FIG 7 provides a schematic view of an electrical circuit, using a single transformer wired for application of HV pulses to four pairs of electrodes wired for generation of four high frequency synchronized arcs;
FIG 8 illustrates a full bridge insulated-gate bipolar transistor (IGBT) based switching circuit which has been used for demonstration of the parallel operation of arcs in combination with circuits shown in Figs. 6 and 7;
FIG 9A and 9B illustrate exemplary voltage and current waveforms between arc generating electrodes;
FIG 10A provides a partial cross section side view of a reactor according to the present disclosure comprising a linear arrangement of electrode pairs; and
FIG 10B provides a cross section top view of the configuration illustrated in FIG 10A.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise, it will be understood that when a connection between structures or components is described, this connection may be established directly or through intermediate structures or components unless specified otherwise.

As used herein the section of the passage or nozzle having smallest cross-sectional area may be understood as the throat. As used herein terminology relating to `about equidistant from the throat' may be understood as separations with a standard deviation ≤ 5%, preferably within 2%, most preferably within 1%.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

The presence of a very high temperature gradient is an intrinsic property of DC (direct current) arcs. The core temperature of the arc plasma column can reach 10,000 - 30,000 K, while the actively cooled reactor walls are kept at surface temperatures below 500 K. Temperature gradients in the main direction of flow are desired and can be obtained by fast heating rate of plasma and downstream quenching. Quenching is achieved either via endothermic chemical reaction or via physical quenching, for example by injection of water. However, transverse-to-flow (or 'radial' in case of a tubular reactor) temperature gradients appear difficult to avoid.

DC arcs are used to convert hydrocarbons to C2H2 and H2, for example using the so-called Hüls process. Products are formed sequentially according to the simplified scheme CH₄ → CH₃ (radical) → C₂H₆ → C₂H₄ → C₂H₂ → Carbon + Hydrogen. Although the Hüls process uses supersonic gas velocities (1000 m/s), resulting in a 1-2 millisecond average residence time, the spreading of residence times according to different flow paths through the reactor is significant. As a consequence of the radial temperature gradients and variability of gas flow paths through the DC arc reactor, each path corresponding with a different temperature profile as a function of time, the production of C₂H₂ or C₂H₄ (typically more desirable) is sub-optimal. Radial gradients of temperature and plasma species as well as spreading of residence times are main factors which limit product selectivity. By the improved control of both temperature distribution and gas residence times the carbon formation will be suppressed and relative C₂H₄/C₂H₂ yields can be increased in combination with a reduced energy cost per unit of mass product produced.

The plasma reactor as disclosed herein aims to address one or more of the issues above. In order to increase uniformity of treatment in a flow-through plasma reactor, a reactor can advantageously provide a high number density of several moderately powered arc discharges, adjacent to each other within a limited reactor volume. Realized benefits include one or more of:
- Generation of adjacent arc discharges with moderated power density within a limited reaction volume while avoiding merging of discharges
- Control over energy density and thereby temperature by pulse-modulation;
- Reduced energy costs (e.g. in kWh/kg C₂Hₓ and kWh/kg H₂ produced);
- Reducing of unwanted material deposition (such as soot) on electrodes or walls;
- Improved life time and reduced complexity of replacement of electrode/dielectric materials; and
- Acceptable material and component costs, including the electrical power converters.

The proposed plasma reactor as disclosed herein can be characterized by one or more of:
- High voltage (HV) electrodes, positioned in a flow passage, provided with a throat area. As such gas flow within the reactors is accelerated when approaching the throat area, reducing residence time at the reaction zone.
- Multiple pairs (at least two) of HV electrode rods are present. The total number of HV electrodes in the reactor can be 4, 6, 8 etc.
- Tips of electrode rods can be arranged in a number of configurations. For example, in a circular or linear row at approximately equal distance from the throat area of the passage. A separation between adjacent tips can optionally be about equal as well.

- A primary gas flow is injected along the surface of each electrode rod.
- HV pulses are applied repetitively, with high frequency and simultaneously to successive electrode pairs, creating synchronized high frequency arc discharges bridging the electrodes of each pair.
- Neighboring HV electrodes providing current to different arcs are operated at the same time-varying potential, avoiding arc discharges between those HV electrodes.
- As a consequence, arc discharges (principally V-shape structured) extend towards the throat area of the passage, getting close to each other while remaining separated.
- A secondary gas flow injector can be present, positioned between HV electrodes, oriented towards the throat area of the passage.
- During operation the plasma-activated primary gas reacts with the secondary gas.
- Arc discharges extend towards the mixed zone of primary and secondary gas.
- The chemical conversion reaction of the primary and secondary gas mixture principally occurs in a limited volume inside or nearby the throat area.
- Different gas flow paths through the volume, wherein multiple, uniformly distributed, synchronized, non-overlapping arc discharges are generated, can be characterized by one or more or even all of: (1) High uniformity of the temperature and plasma species concentration profiles as function of time, (2) Sub-millisecond average residence times, and (3) Limited spreading of the residence times.

The reactor 100, as depicted in F 1, comprises a passage formed as a converging nozzle 1. The nozzle can be housed within or formed as a part of the reactor (e.g. as a separate or replaceable part as drawn). The nozzle has a throat area 2, defined as a part of the nozzle having a smallest cross-sectional dimension. The throat is fluidly connected to outlet 3 for collecting a product flow.

The reactor further comprises at least two pairs of electrodes, shown in top view of the reactor, as depicted in Fig.2. Each electrode 10 comprising a tubular jacket 11, an electrode rod 12, the rod generally extending longitudinally within the jacket. Each electrode further comprises a respective first inlet 14 for injecting a flow of a primary gas G1 along a surface of the electrode rod towards a tip 13 of the respective electrode rod. As best seen in for example Fig. 2 the electrode rods are distributed around a longitudinal axis of the converging nozzle. The tips of the electrode rods 13 are positioned upstream the throat area and about equidistantly separated therefrom.

A second inlet 5 may be provided for injecting a secondary gas G2 at a location upstream or downstream the throat area. The second inlet preferably has an outlet between the electrode tips and is directed towards the throat of the converging nozzle. Alternatively, the second inlet for injecting a secondary gas G2 may be combined with the first inlet, or may be combined with a third inlet.

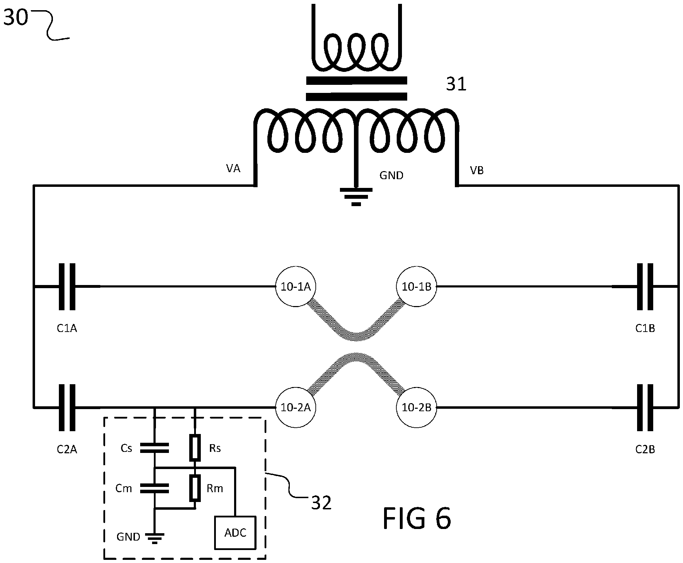

Electric operating circuitry 30 is provided to drive the electrodes. The circuitry, as described in further detail with reference to Figs. 6-9 is connected to the electrodes and comprises at least one power source 40.

High voltage (HV) electrode rods 10 are typically cylinder-shaped. The rods 12 can be made for example of an appropriate composition as known in the field, for example tungsten or steel. The HV electrode rods may be a consumable material, such as graphite rods, continuously fed to the reactor by well-known methods (known from plasma pyrolysis of methane to hydrogen and carbon black, metal welding or melting for metallurgy applications). The HV electrode rods are contained in tubes 11 for transporting a primary plasma gas to the reaction volume along the outer surface of the HV electrodes rods. The tubes may be made of an appropriate composition as known in the field including but not limited to a metal such as steel types, titanium or ceramics, such as SiC or alumina. Metal tubes are preferred for facilitating a simple connection to gas supply lines (not shown). A boundary layer of primary gas flow covers at least partially the protruding parts of the rod 12 including the tip 13.

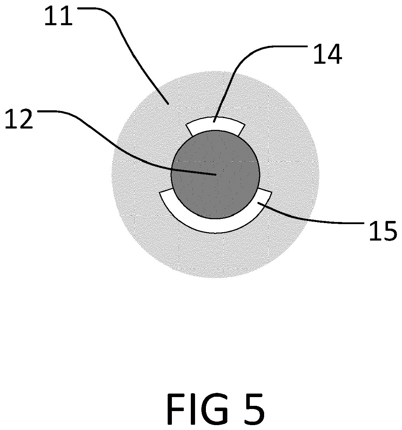

The tips of the electrode rods are preferably kept at controlled distance from tube ends in order to localize arc formation at electrode ends only, thus avoiding arc discharges between tubes. The primary gas flow fulfills several functions including an electrode rod and tube cooling function. More details of flow control using specific positions and shapes of the tube-electrode system are described with reference to Figs. 2 and 5.

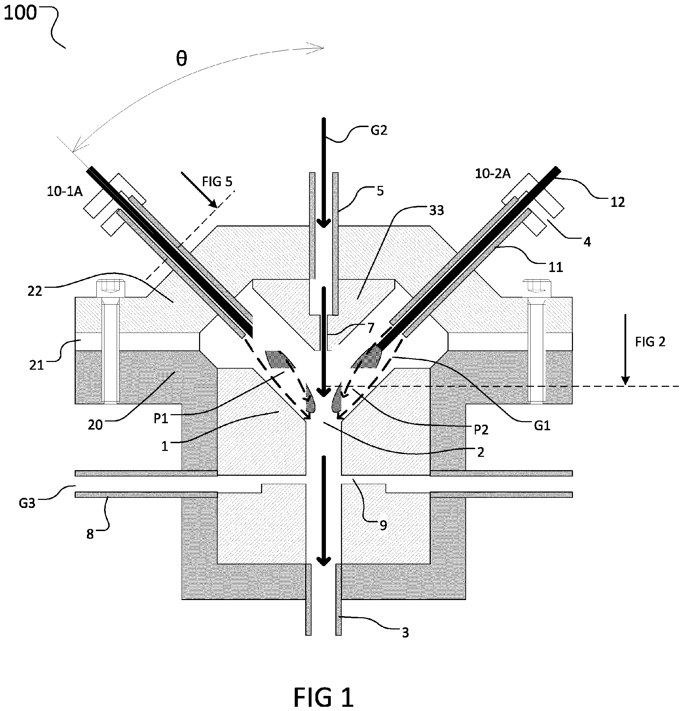

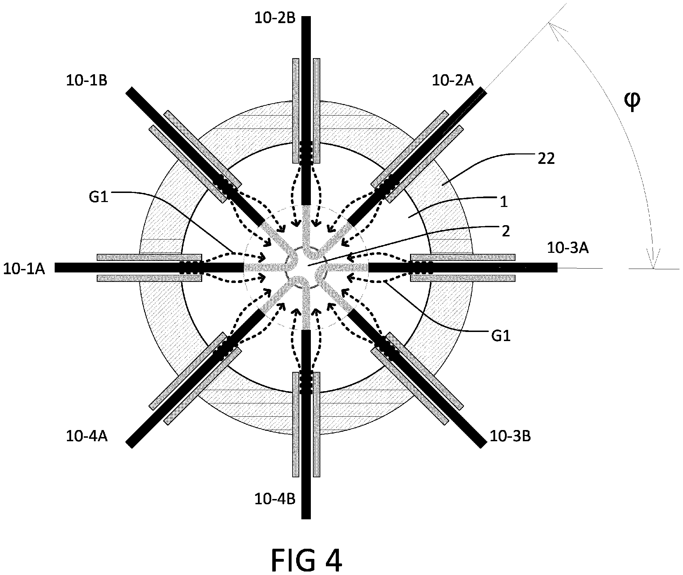

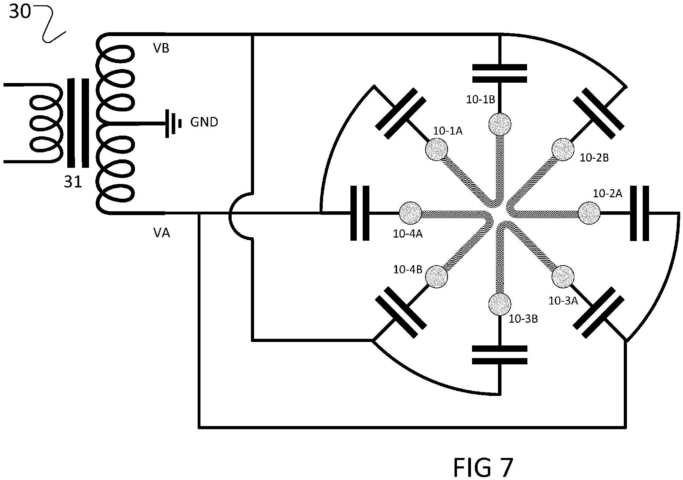

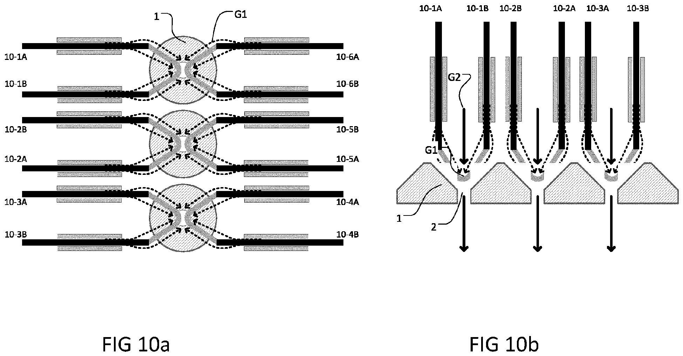

Though the cross section in Fig. 1 shows a single pair of HV electrodes, the plasma reactor according the proposed invention, contains a number n (n≥ 2) of electrode pairs. Fig. 2 and Fig. 6 illustrate aspects of embodiments with 2 pairs, Fig. 4 and Fig. 7 illustrate aspects of embodiments with 4 pairs. Fig. 10 illustrate aspects of embodiments with linear rows of electrode pairs. In embodiments using a circular arrangement of electrode pairs the number of electrode pairs is preferably even. For example, n=2, 4, 6 providing a number of electrodes 2n=4, 8, 12.

The passage 1 is preferably made of dielectric material, for example quartz or high temperature resistive ceramic material, for example boron nitride. However, the use of a conductive nozzle is not excluded. When electrically conductive, the nozzle may be operated at a floating electrical potential, not directly connected with one of the electrodes being separated from them by a cold primary gas flow boundary layer. Conductive nozzles are preferably made of graphite and water cooled (not shown) when being made of metals such as steel and copper.

In the example shown in Fig. 1, the electrodes are oriented under an angle of 45 degrees relative to the z-axis. Envisioned angles are between 30 and 60 degrees or between 60 and 90 degrees. Angles with respect to the z-axis are preferably all equal for different HV electrodes in the same plasma reactor.

A secondary plasma gas injector 5 is shown, positioned along the vertical z-axis of the plasma reactor. To increase homogeneity of exposure to plasma induced reaction, the injector preferably opens centrally between the electrodes. The secondary plasma gas is principally mixing and reacting with the plasma activated primary plasma gas. That is at some distance downstream of the end position of HV electrodes and their respective electrode rod tips 13. This allows primary plasma gas being sufficiently activated before reacting with secondary gas. In addition, the reactive mixing zone can be confined to the small throat area, thus limiting reaction times.

The embodiment as shown in Fig. 1 is equipped with a duct element 33, separating primary and secondary gas flows, G1 and G2, directing them to the throat area 2 of the passage 1. The duct element 33 is provided downstream of the secondary gas inlet 5, and has a secondary gas channel 7 that has a reduced diameter relative to the upstream secondary gas channel 7. This increases the speed and narrows the flow profile of the secondary gas, thus facilitating mixing of plasma activated gas G1 with secondary gas G2 in a limited volume.

Plasma activation can be understood as formation of reactive plasma species such as free electrons, ions, radicals, vibrationally and/or electronically excited molecules as well as heating by means of the electrical resistive discharge current. Plasma activation is the generic term used independent on the detailed mechanisms forming the reactive plasma species, whether caused by heating, electric impact dissociation or vibrational excitation or a combination of these mechanisms. The dominating mechanisms of chemical conversion depend on application specific factors such as the feed stock gas compositions, their flow rates and energy density.

As illustrated by gas flow paths G1 (indicated as a dotted line) in Figs. 1 and 2, the spatial stability of arc discharges in general, is influenced by gas flow. According the present disclosure, the arc discharges can advantageously possess principally a V-shaped structure. Two discharge zones can be distinguished: In the first discharge zone, nearby the electrodes, at least part of the primary plasma gas is activated. The repetitive arc discharge is stabilized by the relative cold gas flow enveloping the arc channels. Arc stabilization is understood here as repetitively generated arcs with reproducible linear structure and following approximatively identical spatial paths. This first discharge zone corresponds to the two 'legs' of the V-shape. In the second discharge zone, corresponding to the pointed area of the V-shape structure, the arc current crosses the main flow direction. In this area the arc is more sensitive to flow. The repetitive arc channel paths may move in the direction of flow with a characteristic gliding-arc re-ignition frequency, lower than the arc repetition rate frequency. The gliding arc phenomenon under repetitive pulsed arc conditions is known from literature.

Advantageously, due to the converging passage shape in combination with the primary gas flow injected along the passage wall, the pointed area of the V-shaped arc remains relatively small with respect to the total arc length. In other words, the V-shape is relatively sharp. As a result, in spite of the drag force encountered by the impact of the gas flow, it was found that the repetitive V-shaped arcs can advantageously remain located in the converging passage 1 upstream the throttle area 2.

Without wishing to be bound by theory it is believed that since arc discharges with equal thus electrostatically repelling charges are generated simultaneously in the limited volume at the bottom of the passage, the arc discharges do not share current paths. Thus merging, forming a lower number of channels with higher current, can be avoided or at least mitigated. This results in a high number density of uniformly distributed arc discharges near the volume of the throat area 2.

The flow velocity towards the throat can be strongly accelerated by the combined effects of decreasing flow aperture, heating and chemical dissociation.

For optimum chemical production yields (e.g. for manufacture of ethyne, ethylene, hydrogen, NOx) a fast temperature decrease (quenching) may be desired to reduce side reactions. Quenching ideally occurs by endothermic chemical conversion reactions. Additional quenching may be achieved by injecting a quench fluid flow G3, e.g. a gas or quench liquid, leading to additional physical quenching, additional chemical quenching or a combination of those factors. In a preferred embodiment, the plasma reactor 100 comprises one or more further inlets 8 for injecting one or more quench gas flows G3. The quench gas is preferably injected between the throat area 2 and the reactor outlet 3. To distribute the quench gas a distribution element, e.g. distributing ring 9, can be provided. The reactor, housing and further components, can be manufactured from known materials, preferably materials known to withstand the conditions during operation. Cooling, e.g. wall cooling, may be provided as needed. Reactor wall parts may be made from one or more of metal, ceramic, and polymer compositions and/or composites.

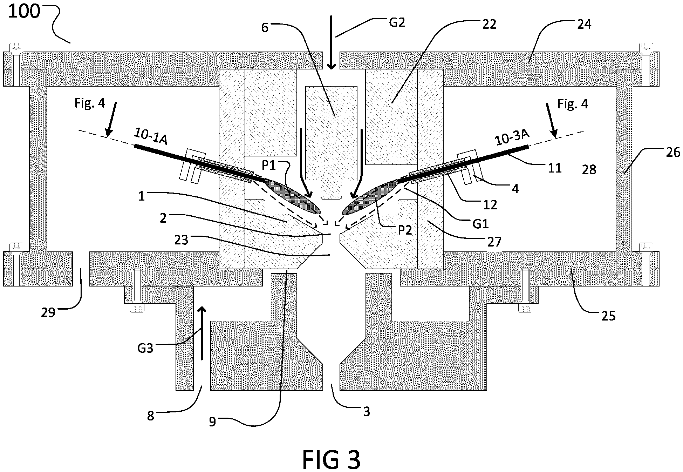

In some embodiments of the plasma reactor 100, the secondary gas flow G2 is distributed along an angular opening using a flow shaping element 6. Compared with a single injection channel, the flow shaping element 6 allows for injection of the secondary gas G2 in the downstream section of V-shaped arc plasma channels using a larger number of electrode pairs within a single reactor unit, see Fig. 3 and 4.

In de reactor according Fig. 3, electrode rods 11 can be automatically fed to the plasma chamber via electrode tubes 12. Electrodes 10 are mounted in a wall 27 of a dielectric material, e.g. a coating, separating the plasma zones (P1, P2, ...) from an electrode feeding chamber 28. The electrode feeding chamber is made of cover plate 24, bottom plate 25 and side wall 26. The electrode feeding chamber can be used in addition for stocking and automatic replacement (not shown) of electrode materials. The electrode feeding chamber can be pressurized with inert gas to a pressure level corresponding the pressure of the primary gas G1, via gas inlet 29. Alternatively, gas inlet 29 can be used as inlet for primary gas G1.

The consumption of electrode rod material by operating the pulsed arc discharges with repetitive HV pulses, is strongly reduced when compared with electrode rod consumption needed for DC or line frequency AC arc operation at the same power. The time-averaged voltage is higher and the time-averaged current is lower which is beneficial for the reduction of erosion. In addition, a reactor such as shown in Fig. 3 can be operated with a larger number of electrodes in parallel which is beneficial for increasing the operating time before electrode replacement becomes necessary.

In some embodiments, the reactor further comprises a diverging flow element (23), e.g. as shown in Fig. 3. Here the gas flow can continue to be accelerated by the pressure gradient.

Advantageously the plasma heated and dissociated gas flowing through the converging nozzle passage can be accelerated to Mach number 1 in the throat area. Then, downstream the throat area the gas flow becomes supersonic.

The physical expansion of the gas can be used for faster cooling and thereby extremely fast quenching of chemical reactions. When velocities are slowed down heat may be released again. In addition, radical recombination reactions may cause heating.

Therefore, in the diverging section of the passage, active quenching, e.g. by injecting feed-stock materials may be still desired, e.g. as shown in Fig. 3.

Fig. 4 shows a top view of the passage. According to the proposed invention, more than one arc discharges are created in the converging reaction volume, using at least two pairs of electrodes. In the example shown in Fig. 4, four plasma channels are formed from 4 electrode pairs.

Fig. 4 shows, in an indicative manner, how primary gas flow G1 leaving electrode gas tubes, can first diverge and again converge when approaching the throat area 2.

An angle (ϕ) between adjacent electrodes can depend on a total number of electrodes. The angle (ϕ) between adjacent electrodes can be smaller than the angle between arc forming electrodes within a single pair. This allows for placing adjacent arc forming pairs closer to each other, thus obtaining a more uniform plasma treatment of primary gas G1.

The reaction volume can be understood as being defined by the converging volume section of the dielectric passage wherein plasma activated gases from different HV electrodes mix to a single flow towards the circular throat area.

HV electrode and electrode-tube shapes can be optimized in order to obtain a desired primary plasma gas flow profile. Accordingly, in some embodiments, the tubular jacket 11 is configured to provide an asymmetric flow volume 14, 15 around the surface of the rod 12 such that a flow resistance along a converging passage-, or in the shown example nozzle-, facing side of the electrode rod is comparatively smaller than a flow resistance along a side of the rod facing the longitudinal axis of the passage. Fig. 5 shows an exemplary embodiment.

Primary plasma gas may be injected in the reactor with a uniform angular flow distribution along the perimeter of rod shaped HV electrodes. However, different flow distributions may be used for specific functions:
A first function is to stabilize a first arc discharge zone, resulting in effective gas heating of primary gas before reaching the secondary zone nearby the throat where primary and secondary gas flows are mixed. For this first function, a uniform flow distribution along each HV electrode rod can be used.
A second function is to create a boundary layer with gas flow along the passage surface, or in the shown example the converging nozzle surface, which remains at relatively low temperature and contains relatively low concentrations of plasma species. Advantageously the boundary layer gas can contain no or negligible secondary plasma gas reaction products. Avoiding or minimizing concentrations of secondary plasma gas reaction products, mitigates or even eliminates deposition of materials on the passage and / or nozzle surface. Besides avoidance of solid material deposition, additional reasons for the boundary gas layer alongside the passage surface are thermal isolation of the passage material and reduction of heat loss to this material.
A third function may be realized concentrating the primary gas flow partly along the surface of the passage, or in the shown example the converging nozzle, and partly towards the axial area of the plasma reactor. This will supply primary plasma gas where it is most needed and this will permit some angular spreading of repetitive arc discharges in the azimuthal direction. This can improve the distribution of repetitive arc discharges in azimuthal direction.

Fig. 6 shows (part of) an electrical circuit 30 as comprised in the plasma reactor 100. The circuit comprises a single transformer 31. The transformer is configured to apply HV pulses to two pairs of electrodes (marked 10-1A, 10-1B, respectively 10-2A, 10-2B), thereby generating two repetitive and synchronized repetitively pulsed arc discharges between electrodes pairs, while avoiding unwanted arcs discharges between neighboring electrode pairs.

Each of the electrodes is galvanically decoupled from the circuit. In a preferred embodiment, e.g. as shown, each electrode is connected to a single transformer via an identical series capacitor (C1A, C1B, C2A, C2B). The capacitors, together with their charging voltage, pulse length and pulse repetition frequency determine the power delivered to each individual arc discharge. Neighboring electrodes 10-1A and 10-2A are connected to the same pulse transformer (31) terminal (VA), whereas neighboring electrodes 10-1B and 10-2B are connected to the opposite pulse transformer (31) terminal (VB). When current pulses are applied to the primary of the pulse transformer, identical voltage and current waveforms are applied to HV electrode pairs 10-1 and 10-2.

The use of about identical series capacitors at each electrode is preferred. It will be appreciated that as an alternative transmission line (e.g. coaxial cable) capacitors may be advantageously used as effective and low-cost energy per pulse limiting components.

It will be appreciated that alternative electrical circuits can be used. In particular one or more of the electrode pairs may be fed from separate pulse transformers. For example, using a separate pulse transformer and synchronized pulsed current generating circuitry per arc generating electrode pair.

It is further noted that the high voltage pulses are used to reignite the arc discharges at the start of each pulse. The arc discharge develops mainly in the residual charged and heated channel of previous discharges, in spite of the fact that plasma species and heat are moved away by gas flow. Inventors experimentally found that repetition rates of at least 10 kHz provided most stable high frequency arc operation.

The fact that arcs are re-ignited during every pulse may cause differences in the ignition voltage and thus voltage and current waveforms between neighboring arc generating electrode pairs. By means of experiments with 5 microsecond pulses (FWHM), with a repetition frequency varied between 10 kHz and 200 kHz, and measuring voltage and current waveforms at each electrode, inventors found that differences in ignition voltage between arcs are sufficiently small. For example, operating the discharge with 1.8 mm diameter tungsten electrodes and 10 mm gap distance in atmospheric pressure nitrogen, ignition voltages in the range 1.9-2.2 kV were measured for pulses that would reach 5 kV open circuit voltage without ignition. Capacitor values were 1 nF. Unwanted arc discharges between electrode pairs were not observed.

In some embodiments, e.g. as illustrated in Fig. 6, the one or more capacitive-resistive voltage divider 32 is provided (only one drawn). The voltage divider 32 is connected to electrode marked 10-2A. By providing a simple voltage and/or current monitoring device, such as the capacitive-resistive voltage divider 32 indicated, preferably at least one in connecting with each electrode, voltage and currents can be processed in real-time and used to determine the degree of erosion per electrode. Several means of control can be used: a) Averages values of dV/dt can be used to calculate stray capacitance of the electrode which will increase with gap elongation. Deviations from the preferred capacitance value may thus be used to move the rod in the desired position; b) Alternatively, or in addition, from integrated values of voltage times current, energy per pulse data can be used.

Fig. 7 shows part of an electrical circuit 30 suited for generation of 4 high frequency, synchronized arc discharges in a single plasma reactor with converging passage and a single throat. Again, as mentioned above with reference to the description of the circuit shown in Fig. 6, as an alternative the paired electrodes may be connected to 4 individual HV pulse generating power supply units. It will be understood that a preferred configuration can depend on the series produced costs of power supplies and the voltage and current switching capabilities of semiconductor switching components such as insulated-gate bipolar transistor (IGBT).

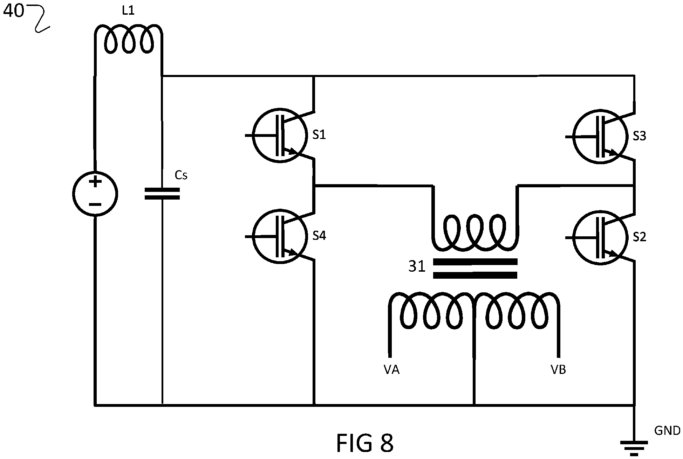

Preferably a spacing (s2) between tips of the electrodes operating at the same time-varying potential is comparative smaller than a spacing (s1) between tips of neighboring ones of the electrode rods that operate at an arcing potential differential. Fig. 8 shows a full bridge IGBT based switching circuit which has been used for demonstration of the parallel operation of arcs in combination with circuits shown in Figs. 6 and 7. Positive pulses are being generated by simultaneously opening switches S1 and S2 during the pulse, before again simultaneously closing them. A pulse length of 5 microseconds and a repetition rate in the 10-200 kHz range have been used. In order to produce opposite polarity pulses, switches S3 and S4 can be simultaneously opened and closed.

This circuit can be used to produce repetitive positive polarity pulses, negative polarity pulses or alternating polarity pulses. IGBT switches can be replaced by parallel groups of IGBT switches in order to increase the maximum current capabilities.

Alternative circuits are possible as well, for instance by switching directly a high voltage using stacked semiconductor switches. In addition, transmission line (cable) transformers can be used.

Inventors identified that a plasma reactor according the invention may be operated at frequencies above 200 kHz, for example at a frequency in the 1-20 MHz range. It is emphasized that, due to an enormous progress in semiconductor-based power electronics, capabilities of those components, driver and control circuits have increased and costs have been reduced. The power converters needed for the proposed invention comprise a limited number of commercially available components.

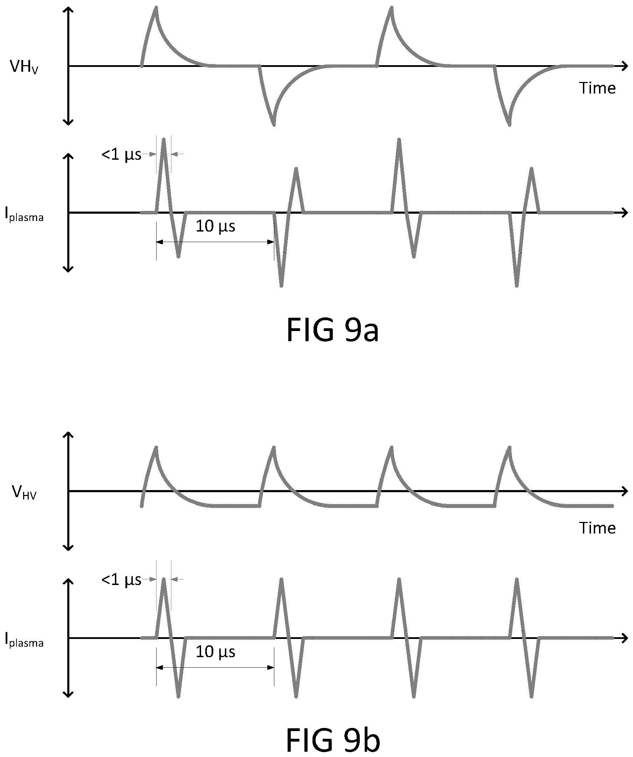

Fig. 9 shows examples of voltage and current waveforms which can be measured between arc generating electrodes using a circuit as shown in Figs. 6, 7 and 8. Experimentally applied HV pulse widths can in the 1 - 10 microsecond range, less than the time period between consecutive HV pulses, which are typically in the 10 - 100 microsecond range (10 - 100 kHz pulse repetition rates).

Inventors experimentally confirmed, by video recordings, that the reactor as disclosed herein can be operated to repetitively generate arcs that are V-shape structured, that extend towards the throat area of the passage, get close to each other while remaining separated over prolong periods.

Measured currents reflect of the sum of capacitive current (Cgap*dV/dt) and discharge current. In the given examples of Fig. 9, only plasma currents are indicated schematically. I(plasma) = I - Cgap*dV/dt. Alternating voltage polarity pulses as well as unipolar voltage polarity pulses have been applied to the electrode system with the series connected capacitors included. Alternating polarity pulse operation may be preferred as this results in prolonged net charging of arc channels. The effect can be beneficial for avoiding unwanted merging of arc channels. Without wishing to be bound by theory this may be understood as follows:

With reference to Fig. 9a, alternating polarity voltage pulses are applied to electrodes comprising series capacitors. The figure shows voltage and plasma currents when measured between electrodes without capacitors. Because of the fast build-up of pulsed arc conductivity, the current pulse consists of a forward current peak which is immediately followed by a backward current peak. However, the forward and backward current peaks do not transport an equal charge to the arc channel. A net positive charge is delivered to the plasma arc channel during each applied positive voltage pulse, which is compensated during each applied negative voltage pulse.

With reference to Fig. 9b unipolar positive voltage pulses are applied to electrodes comprising series capacitors, the measured electrode potential between HV pulses becomes automatically negative. In this case, the net charge delivered to the discharge is (closer to) zero within a single pulse-to-pulse period.

Fig. 10 shows a linear arrangement of electrode pairs according to the proposed invention. Accordingly, elongated plasma reactors can be provided, with higher numbers of arc generating electrode pairs n. Advantageously, the operable power range of a plasma reactor unit may be significantly increased.

In some embodiments, e.g. as shown, the reactor may comprise a number of cylindrical converging passages 1 with circular throat areas 2. In this manner, a control over flow properties may be maintained.

Depending on primary and secondary gas flow compositions, the reactor as provided herein can be used to advantage for a variety of chemical conversion processes. Exemplary processes include:
- Production of alkenes and/or alkynes (such as C₂H₂, C₂H₄, and/or C₂H₆) from H₂ or H₂/hydrocarbon mixtures as primary gas and hydrocarbons such as CH₄ or mixtures of hydrocarbons as secondary gas. Produced H₂ can be after separation recycled used as primary gas.
- Production of syngas (H₂ and CO) from (bio)methane and CO₂, optionally in the presence nitrogen, as secondary gas. H₂ may be recycled as primary plasma gas.
- Production of HCN. For example, from mixtures of H₂/N₂ as primary gas and methane/hydrocarbons as secondary gas. N₂ may be recycled as primary plasma gas.
- Production of NO and NO₂ using N₂ or N₂/O₂ comprising mixtures as primary gas, and using N₂/O₂ comprising mixtures (e.g. dry air), as quenching gas, optionally enriched with ozone.

Accordingly, there is provided a use of the reactor as disclosed herein in the production of: i) olefins; ii) syngas; iii) HCN; or iv) NO and/or NO, wherein for the production of olefins the use comprises: providing to the first inlet of the electrodes a feed comprising H₂ or a mixture comprising H₂ and hydrocarbons as a primary gas flow, and providing to the second inlet a feed comprising methane or a mixture of hydrocarbons as a secondary gas flow, wherein for the production of syngas the use comprises: providing to the first inlet of the electrodes a feed comprising H₂ as a primary gas flow, and providing to the second inlet a feed comprising methane and CO₂ as a secondary gas flow, wherein for the production of HCN the use comprises: providing to the first inlet of the electrodes a feed comprising a mixture comprising H₂ and N₂ as a primary gas flow, and providing to the second inlet a feed comprising methane or a mixture of hydrocarbons as a secondary gas flow, and wherein for the production of NO and/or NO₂ the use comprises: providing to the first inlet of the electrodes a feed comprising N₂ or a mixture comprising N₂ and O₂ as a primary gas flow, and providing to the second or quenching inlet a feed comprising N₂ and O₂, e.g. dry air, as a secondary gas flow, optionally enriched with ozone, and wherein for i) and ii) the use preferably comprises recycling part of a H₂ content separated a product flow as received from the reactor outlet to the primary gas flow, and wherein for iii) the use preferably comprises recycling part of a H₂ content separated a product flow as received from the reactor outlet to the primary gas flow.

Alternatively, the secondary and/or the quenching gas flow can comprise, or be replaced by, liquids or a flow of solid particulates or a combination of phases. For example, powder materials may be melted and/or evaporated and/or pyrolyzed and further treated using the proposed plasma reactor.

For the purpose of clarity and a concise description, features are described herein as part of the same or separate embodiments, however, it will be appreciated that the scope of the invention may include embodiments having combinations of all or some of the features described. Of course, it is to be appreciated that any one of the above embodiments or processes may be combined with one or more other embodiments or processes to provide even further improvements in finding and matching designs and advantages.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A plasma reactor (100) for plasma induced chemical conversion of reagents such as hydrocarbons, the reactor comprising
a passage (1) housed within the reactor and having a throat area (2) that is fluidly connected to a reactor outlet (3);
at least two pairs of electrodes, each electrode (10) comprising a tubular jacket (11), an electrode rod (12) extending longitudinally within the jacket, and a first inlet (4) for injecting a flow of a primary fluid (G1) along a surface of the electrode rod towards a tip of the respective electrode rod, wherein the rods are distributed around a longitudinal axis of the passage and wherein the tips of the electrode rods are positioned upstream the throat area and about equidistantly separated therefrom;
a second inlet (5) for injecting a flow of a secondary fluid (G2) upstream or downstream the throat area (2);
and electric operating circuitry (30) connected to the electrodes and comprising at least one power source (40), wherein each of the electrodes is galvanically decoupled from the power source and from the rest of the electrodes;
wherein, during use, the power source is driven to
repetitively and simultaneously power the at least two pairs of electrodes at a voltage and rate thereby generating, for each pair of the at least two pairs of electrodes, a synchronized arc discharge bridging the electrodes of the pair of electrodes, and
drive neighboring electrodes of adjacent pairs at the same time-varying potential.

2. Plasma reactor according to claim 1, wherein a spacing (s1) between tips of the electrodes of pairs operating at the same time-varying potential is comparative smaller than a spacing (s2) between tips of neighboring ones of the electrode rods that operate at an arcing potential differential.

3. Plasma reactor according to any of the preceding claims, wherein an end portion of the electrode rod (12) including the tip (13) protrudes from the tubular jacket thereby exposing the rod end section.

4. Plasma reactor according to any of the preceding claims, wherein an angle (θ) between the longitudinal axis (z) of and each of the rods at the passage is within a range of 30 to 90 degrees, preferably between 30 and 60 degrees

5. Plasma reactor according to any of the preceding claims, wherein a tubular jacket is configured to provide an asymmetric flow volume (14, 15) around the surface of the rod such that a flow resistance along a converging passage-facing side of the electrode rod is comparatively smaller than a flow resistance along a side of the rod facing the longitudinal axis of the passage.

6. Plasma reactor according to any of the preceding claims, wherein a frequency of the time-varying potential in a range of 10 kHz - 200 kHz.

7. Plasma reactor according to any of the preceding claims, comprising a further inlet (8) for injecting a quench gas flow (G3) at position between the throat area (2) and the reactor outlet (3).

8. Plasma reactor according to any of the preceding claims, wherein said second inlet injects the flow of secondary fluid between the electrode tips and is directed towards the throat of the passage.

9. Plasma reactor according to any of the preceding claims, further comprising a diverging flow element (23) disposed between the throat and the outlet.

10. Plasma reactor according to any of the preceding claims, wherein the passage and/or the diverging flow element (23) are formed of a dielectric refractory composition.

11. Plasma reactor according to the preceding claims 7-8, wherein the further inlet (8) is disposed downstream the diverging flow element.

12. Plasma reactor according to any of the preceding claims, wherein each of the electrodes is separately coupled capacitively to a single power source (30) via a respective capacitor (C).

13. Plasma reactor according to any of the preceding claims, wherein each of the electrodes is separately coupled to a single transformer.

14. Plasma reactor according to claim 13, wherein each of the electrodes is separately coupled capacitively to a single transformer.

15. Plasma reactor according to any of the preceding claims, further comprising at least one capacitive-resistive voltage divider (32) operably connected to an electrode and configured for inline voltage and or current monitoring of said electrode during operation.

16. Plasma reactor according to any of the preceding claims, wherein the operating circuitry is configured for alternating polarity pulse operation to drive neighboring electrodes of adjacent pairs.

17. Plasma reactor according to any of the preceding claims, further comprising a wall provided around the longitudinal axis of the passage, wherein the at least two pairs of electrodes are provided through the wall such that the tips of the electrode rods are positioned upstream the throat area and about equidistantly separated therefrom.

18. Plasma reactor according to any of the preceding claims, wherein the passage comprises a nozzle converging towards the reactor outlet and wherein the throat area is provided in said nozzle.

19. Plasma reactor according to any of the preceding claims, further comprising a flow shaping element (6) provided in the second inlet such that the second inlet opens between the electrode tips and has an annular opening.
